**Europäisches Patentamt**

**European Patent Office**

**Office européen des brevets**

(11) Veröffentlichungsnummer: **0 556 942 A1**

## (12) EUROPÄISCHE PATENTANMELDUNG

(21) Anmeldenummer: **93250051.5**

(22) Anmeldetag: **16.02.93**

(51) Int. Cl.5: **B60L 11/02**

(30) Priorität: **21.02.92 DE 4205770**

(43) Veröffentlichungstag der Anmeldung:
**25.08.93 Patentblatt 93/34**

(84) Benannte Vertragsstaaten:
**DE ES FR GB IT SE**

(71) Anmelder: **MANNESMANN Aktiengesellschaft**
**Postfach 10 36 41**
**D-40027 Düsseldorf(DE)**

(72) Erfinder: **Schmidt-Brücken, Hans-Joachim**
**Sonnenstrasse 9**
**W-8721 Geldersheim(DE)**
Erfinder: **Thieler, Wolfgang**
**Kastanienweg 1**
**W-8727 Hassfurt(DE)**
Erfinder: **Wagner, Michael**
**Ottostrasse 3**
**W-8721 Niederwerrn(DE)**
Erfinder: **Westendorf, Holger**
**Gänseleite 8**
**W-8721 Hambach(DE)**
Erfinder: **Wychnanek, Rainer**
**Erlenbrunnstrasse 13**

**W-8721 Madenhausen(DE)**
Erfinder: **Schiebold, Stefan**
**Gymnasiumstrasse 4**
**W-8720 Schweinfurt(DE)**
Erfinder: **Adler, Uwe**
**Am Weinberg 12**
**W-8721-Unterspiesheim(DE)**
Erfinder: **Drexl, Hans-Jürgen**
**Kaltenhöfer Steige 11**
**W-8724 Schonungen/Mbg.(DE)**
Erfinder: **Lutz, Dieter**
**Spessartstrasse 12**
**W-8720 Schweinfurt(DE)**
Erfinder: **Nagler, Franz**
**Am Zehntgrafen 12**
**W-8729 Ottendorf(DE)**
Erfinder: **Ochs, Martin**
**An der Eselshöhe 115**
**W-8720 Schweinfurt(DE)**

(74) Vertreter: **Meissner, Peter E., Dipl.-Ing. et al**
**Meissner & Meissner, Patentanwaltsbüro,**
**Postfach**
**D-14171 Berlin (DE)**

(54) **Fahrzeug mit Verbrennungsmotor, elektrischem Generator und Elektromotor.**

(57) Die Erfindung betrifft ein nicht-spurgebundenes Fahrzeug mit einem Verbrennungsmotor 1, an dessen Kurbelwelle ein elektrischer Generator 2 gekoppelt ist, mit mindestens einem an ein Antriebsrad 9a,b oder Antriebsachse des Fahrzeugs gekoppelten Elektromotor 10a,b, mit einer elektronischen Steuerung 6 und einem Fahrpedal 7, das zur Einstellung einer gewünschten Antriebsleistung dient. Das erfindungsgemäße Fahrzeug ist durch die folgenden Merkmale gekennzeichnet:

a) In der Steuerung 6 ist für jeden vom Verbrennungsmotor 1 abzugebenden Leistungswert jeweils eine eindeutige Parameterkombination von Drehmoment, Drehzahl und Einstellung der Kraftstoffzuführung 3 vorgegeben.

b) Für die Betätigung der Einstellung y der Kraftstoffzuführung 3 ist ein Regler 5 vorgesehen.

c) Die Einstellung y der Kraftstoffzuführung ist additiv bestimmt aus einem von der Steuerung 6 ermittelten Einstellwert $y_{St}$ für die Soll-Leistung $P_{Ms}$ des Verbrennungsmotors 1.

d) Die absolute Größe des Stellanteils $y_R$ des Reglers 5 ist in Abhängigkeit von der Regeldifferenz bestimmt.

e) Ist die Soll-Leistung $P_{Gs}$ höher als die momentane Leistung $P_{Gi}$, läßt die Steuerung 6 die Leistung $P_{Gi}$ des Generators 2, ausgehend von ihrem momentanen Wert, bis auf den Sollwert $P_{Gs}$ monoton steigen.

Rank Xerox (UK) Business Services
(3.10/3.6/3.3.1)

Fig.1

Die Erfindung betrifft ein nicht-spurgebundenes Fahrzeug gemäß dem Gattungsbegriff des Patentanspruchs 1.

Während bei spurgebundenen Fahrzeugen elektromotorische Antriebe seit vielen Jahrzehnten üblich sind, werden bisher derartige Antriebe in Straßenfahrzeugen, also bei nicht-spurgebundenen Fahrzeugen wie Personen-, Lastkraftwagen und Busse nur in wenigen Sonderfällen eingesetzt. Insbesondere im Bereich des Personenkraftfahrzeugbaues handelt es sich dabei im Regelfall um Experimentierfahrzeuge. Nach wie vor werden Straßenfahrzeuge normalerweise mit einem Verbrennungsmotor ausgerüstet, der über einen mechanischen Antriebsstrang auf die Antriebsräder wirkt. Um bei unterschiedlichen Fahrgeschwindigkeiten einen für die jeweilige Fahrsituation günstigen Bereich aus dem Drehzahl/Drehmoment-Kennfeld des Verbrennungsmotors nutzen zu können, ist im Antriebsstrang üblicherweise jeweils ein handbetätigtes Schaltgetriebe oder ein Automatikschaltgetriebe mit hydraulischem Drehmomentwandler vorgesehen.

Damit wird erreicht, daß der Fahrer, der bei gegebener Fahrzeuggeschwindigkeit durch entsprechende Veränderung der Gaspedalstellung (Fahrpedal) einen Beschleunigungsvorgang durchführt, durch die Wahl des Getriebegangs die Möglichkeit hat, unterschiedliche Bereiche aus dem Drehzahl/Drehmoment-Kennfeld und somit unterschiedliche Leistungsstufen für den Beschleunigungsvorgang zu nutzen. Entsprechendes gilt für den umgekehrten Vorgang der Nutzung der Motorbremswirkung beispielsweise bei Bergabfahrten.

Bei einem herkömmlichen Fahrzeug mit Verbrennungsmotor wirkt das vom Fahrer betätigte Fahrpedal im Grundsatz unmittelbar auf die Einstellung der Kraftstoffzuführung, d.h. auf die Drosselklappenstellung (bei Vergasermotoren) oder die Fördermengeneinstellung einer Einspritzpumpe (bei Einspritzmotoren), wenn man von den regelnden Eingriffen einer Elektronik bei Fahrzeugen mit Abgasreinigung mittels geregelter Katalysatoren (Lambda-Sonde) einmal absieht. Das bedeutet, daß sich bei Fahrzeugen mit manuellem oder automatischem Schaltgetriebe je nach eingelegtem Fahrgang bzw. gewählter Fahrstufe für jede Einstellung der Kraftstoffzuführung (im folgenden exemplarisch vielfach nur als Drosselklappenwinkel bezeichnet) zwangsläufig eine Drehzahl/Drehmoment-Kombinationam Verbrennungsmotor einstellt. Grundsätzlich gilt für alle Fahrzeuge, deren Getriebe feste Übersetzungsverhältnisse aufweisen, daß die Veränderung der Motordrehzahl des Verbrennungsmotors über den mechanischen Antriebsstrang unmittelbar an die Veränderung der Fahrgeschwindigkeit des Fahrzeugs gekoppelt ist.

Bei Antriebssträngen mit kontinuierlichen Übersetzungsgetrieben ist die Möglichkeit gegeben, eine vom Verbrennungsmotor gewünschte Leistung innerhalb weit gesteckter Grenzen mit beliebigen Drehzahl/Drehmoment-Kombinationen einzustellen, da die Drehzahl des Verbrennungsmotors nicht mehr an die Fahrgeschwindigkeit gekoppelt ist.

Es gibt Fahrzeuge mit kontinuierlichen mechanischen Übersetzungen (CVT-Getriebe), die jedoch nur geringe Freiheiten in der übersetzungsvariation bieten (max. etwa 1:6) und eine Anfahrkupplung benötigen.

Elektromotorische Antriebe, insbesondere Antriebe mit Gleichstrommotoren mit einem (über Dauermagnete) permanent erregten Stator oder Rotor und einem damit korrespondierenden, mit über eine Leistungselektronik angesteuerten Elektromagneten (elektronische Kommutierung) versehenem Rotor bzw. Stator, können aufgrund einer für einen Fahrzeugantrieb günstigeren Drehzahl/Drehmoment-Charakteristik in der Regel ohne Stufengetriebe aus. Für die Versorgung des oder der elektrischen Antriebsmotoren mit elektrischem Strom, die an sich durch Batteriespeicher sichergestellt werden kann, ist es beispielsweise aus der EP 0 249 806 A1 bekannt, einen herkömmlichen Verbrennungsmotor mit einem elektrischen Generator mechanisch zu koppeln. Der mit der Kurbelwelle des Verbrennungsmotors verbundene Generator liefert den benötigten Fahrstrom über eine Leistungselektronik an die elektrischen Antriebsmotoren. Gegenüber einer Speicherung der benötigten elektrischen Antriebsenergie in Akkumulatoren hat ein solches Fahrzeug den Vorteil, daß es bei gleicher Reichweite bedeutend leichter ist, da die heute verfügbaren Akkumulatoren nur eine relativ geringe Speicherkapazität aufweisen und außerordentlich schwer sind.

Bei solchen, von einer Verbrennungsmotor/Generator-Einheit (VGE) mit Strom versorgten elektrischen Antrieben besteht keine mechanische Verbindung mehr zwischen den Antriebsmotoren, so daß diese unabhängig voneinander betrieben werden können. Es lassen sich damit übersetzungsverhältnisse von O (Verbrennungsmotor läuft, Fahrzeug steht) bis unendlich (Verbrennungsmotor steht, Fahrzeug rollt) erreichen. Die VGE muß lediglich die vom Fahrer geforderte Antriebsleistung den Antriebsmotoren zur Verfügung stellen. Die dazu erforderlichen Betriebspunkte der Verbrennungsmaschine (Drosselklappenstellung und Drehzahl) sind allgemein von der angeforderten Leistung abhängig. Bei einer Änderung der angeforderten Leistung ist es möglich, kurzzeitig eine Abkopplung der Stromversorgung vom Generator vorzunehmen, bis der Verbrennungsmotor die Drehzahl des gewünschten neuen Betriebspunktes im Motorkennfeld erreicht hat, um dann unmittelbar den Fahrzeugantrieb mit der neuen Antriebsleistung durchzuführen. Eine solche Betriebsweise hätte jedoch den Nachteil einer - wenn auch kurzfristigen - Zugkraftunterbrechung zur Folge, was als sehr unkomfortabel empfunden würde, ganz abgesehen von der Unmöglichkeit, dies bei jeder minimalen Änderung der Leistungsanforderung durchzuführen.

Aufgabe der Erfindung ist es daher, ein nicht-spurgebundenes Fahrzeug der gattungsgemäßen Art vorzuschlagen, bei dem die Verstellung des Verbrennungsmotors von einem Betriebspunkt in einen anderen ohne Zugkraftunterbrechung im Antriebsstrang erfolgt und die bei herkömmlichen Antrieben bestehenden Beschränkungen bezüglich der Variationsbreite der Antriebsleistung des Verbrennungsmotors bei gegebener Drehzahl im Antriebsstrang entfallen, ohne daß ein Schaltgetriebe vorgesehen werden muß. Die Bereitstellung der jeweils geforderten Antriebsleistung soll dabei im Hinblick auf den Verbrennungsmotor unter optimierten Randbedingungen (z.B. minimaler Kraftstoffverbrauch) möglich sein.

Gelöst wird diese Aufgabe durch ein gattungsgemäßes Fahrzeug mit den kennzeichnenden Merkmalen des Patentanspruchs 1. Vorteilhafte Weiterbildungen der Erfindung sind in den Unteransprüchen 2 bis 10 angegeben.

Die vorliegende Erfindung macht sich die Tatsache zunutze, daß bei einem Fahrzeug mit elektrischem Antriebsmotor (oder -motoren) und mit einer VGE zur Erzeugung des elektrischen Fahrstroms im mechanischen Sinne eine Entkopplung von Elektromotor und Generator vorliegt. Im Grundsatz kann die Drehzahl des Generators und somit des Verbrennungsmotors völlig unabhängig von der Drehzahl des Elektromotors durch eine elektronische Steuerung eingestellt werden.

Die Erfindung sieht vor, daß innerhalb des Drehzahl/Drehmoment-Kennfeldes des Verbrennungsmotors mindestens eine Kennlinie festgelegt ist, die abhängig vom Drosselklappenwinkel alpha (Einstellung der Kraftstoffzuführung) jeder Drehzahl n (innerhalb gegebener Grenzen) einen bestimmten Wert des Drehmoments M des Verbrennungsmotors oder der abgegebenen Leistung P zuordnet. Wegen der Beziehung P = M x n ist die Zuordnung des Drehmomentes praktisch gleichbedeutend mit einer Zuordnung der Leistung zur Drehzahl. Die Kennlinie ist im Hinblick auf die Optimierung eines oder mehrerer Zielkriterien festgelegt und in Form von Algorithmen oder Wertetabellen in einer elektronischen Steuerung des Fahrzeugs gespeichert. Als Zielkriterien können insbesondere zugrundegelegt werden:
- minimaler Kraftstoffverbrauch,
- minimale Schadstoffemission,
- minimale Geräuschemission,
- minimaler Aggregateverschleiß,

- minimale Reaktionszeit bei Änderung der Fahrpedalstellung.

Bei Festlegung mehrerer Kennlinien hat der Fahrer die Möglichkeit, beispielsweise über einen Wählhebel (ähnlich wie die Fahrprogrammwahl bei einem Automatikgetriebe) eine gewünschte Kennlinie für den aktuellen Fahrbetrieb auszuwählen. Die elektronische Steuerung des Fahrzeugs sorgt dann dafür, daß in stationären Fahrphasen der Verbrennungsmotor in einem bestimmten Punkt der ausgewählten Kennlinie arbeitet. Die Lage dieses Punktes auf der Kennlinie wird vom Fahrer über die Betätigung des Fahrpedals vorgegeben.

Das bedeutet, daß der Fahrer über das Fahrpedal anzeigt, mit welcher Antriebsleistung er fahren möchte, und daß die Steuerung anhand der ausgewählten Kennlinie von sich aus eine ganz bestimmte Drehzahl/Drehmoment-Kombination am Verbrennungsmotor einstellt, bei der das jeweilige Zielkriterium oder die jeweilige Kombination mehrerer Zielkriterien optimiert ist. Beispielsweise wird die gewünschte neue Antriebsleistung bei minimalem Kraftstoffverbrauch bereitgestellt.

Um bei einem Beschleunigungsvorgang oder zur Überwindung einer Steigungsstrecke vom bisherigen Betriebspunkt des Verbrennungsmotors in den neuen Betriebspunkt mit entsprechend der Fahrpedalstellung erhöhter Leistung zu gelangen, sieht die Erfindung vor, daß die Fahrpedalstellung nicht unmittelbar auf die Einstellung des Stellgliedes der Kraftstoffzuführung übertragen wird. Der auf dieses Stellglied übertragene Einstellwert y setzt sich erfindungsgemäß additiv zusammen aus einem der Fahrpedalstellung entsprechenden Sollwert $y_{st}$ für die Soll-Leistung $P_{Ms}$ des Verbrennungsmotors im neuen Betriebspunkt gemäß der gewählten Kennlinie und einem im Zeitverlauf bis zum Erreichen dieses neuen Betriebspunktes veränderlichen Regleranteil $Y_R$, der von einem Regler (z.B. ein PID-Regler) aufgeschaltet wird, der auch integraler Bestandteil der elektronischen Steuerung des Fahrzeugs sein kann.

Die Soll-Leistung $P_{Ms}$ des Verbrennungsmotors entspricht unter Berücksichtigung der wirkungsgradbedingten Verluste der vom Fahrer gewünschten Soll-Antriebsleistung der Elektromotoren. Als Regelgröße überwacht der Regler entweder die Ist-Drehzahl des Verbrennungsmotors $n_{Mi}$ oder die vom Generator abgegebene Ist-Leistung $P_{Gi}$. (Letzteres ist selbstverständlich gleichbedeutend mit einer Überwachung der vom Generator aufgenommenen Leistung unter Berücksichtigung des Generatorwirkungsgrades.) Der Stellanteil $y_R$ des Reglers richtet sich nach der Größe der jeweils festgestellten Regelabweichung, d.h. nach der Höhe der Differenz zwischen Ist-Drehzahl $n_{Mi}$ des Verbrennungsmotors und seiner Soll-Drehzahl $n_{Ms}$ entsprechend dem angestrebten neuen Betriebspunkt auf der Kennlinie oder der Differenz zwischen Ist-Leistung des Generators $P_{Gi}$ und der Soll-Leistung $P_{Gs}$, d.h. der gewünschten neuen Antriebsleistung.

Erst wenn die Regelabweichung zu null wird, entspricht die Einstellung y der Kraftstoffzuführung dem Sollwert $y_{st}$ für den neuen Betriebspunkt gemäß Motorkennfeld. Wesentlich hierbei ist es, daß die elektronische Steuerung erfindungsgemäß dafür sorgt, daß während der Einstellung des Verbrennungsmotors auf eine höhere Soll-Leistung $P_{Ms}$ die Leistung $P_{Gi}$ des Generators nicht unter den Wert der Generatorleistung im Zeitpunkt der Einleitung des Verstellvorgangs absinkt, sondern vielmehr sofort monoton ansteigt. Gleichzeitig hält die elektronische Steuerung aber das vom Generator aufgenommene Drehmoment $M_{Gi}$ so lange unterhalb des im Verbrennungsmotor erzeugten Drehmoments $M_{Mi}$, bis der Verbrennungsmotor seine neue Soll-Drehzahl $n_{Ms}$ und damit auch seine neue Soll-Leistung $P_{Ms}$ gemäß Kennlinie erreicht hat.

Auf der einen Seite bedeutet dies, daß gezielt ein erheblicher "überschüssiger" Anteil des vom Verbrennungsmotor erzeugten Drehmoments für die rasche Erhöhung der Motordrehzahl auf die neue Soll-Drehzahl eingesetzt wird. Damit wird beispielsweise die erforderliche Antriebsleistung für einen Beschleunigungsvorgang schnell zur Verfügung gestellt. Bei einem herkömmlichen Antrieb würde die sofortige Bereitstellung einer entsprechend höheren Antriebsleistung die Einlegung eines niedrigeren Getriebeganges erfordern.

Auf der anderen Seite gewährleistet die Erfindung, daß trotz einer schnellen Erhöhung der Verbrennungsmotordrehzahl auf den Sollwert des neuen Betriebspunktes das verfügbare Antriebsdrehmoment nicht nachläßt. Es gibt keinerlei Unterbrechung der Zugkraft im Antriebsstrang, da die elektronische Steuerung für einen sofortigen monotonen Anstieg des vom Generator aufgenommenen Drehmomentes $M_{Gi}$ sorgt.

Mit der Erhöhung der Drehzahl $n_{Mi}$ des Verbrennungsmotors und der damit verbundenen Drehzahlerhöhung am Generator kann wegen der Beziehung P = M x n zwangsläufig eine monotone Erhöhung der für die Antriebsmotoren erzeugten elektrischen Leistung erreicht werden, die sich in einer Beschleunigung des Fahrzeugs auswirkt oder zur Überwindung einer Steigung genutzt wird.

Im Falle einer Reduzierung der angeforderten Leistung, beispielsweise eines Verzögerungsvorgangs, wenn also die Soll-Leistung $P_{Ms}$ des Verbrennungsmotors im neuen Betriebspunkt geringer ist als bei Beginn der Fahrpedalverstellung, sieht die Erfindung eine entsprechend umgekehrte Arbeitsweise der elektronischen Steuerung vor. Die vom Generator erzeugte Leistung $P_{Gi}$ wird ausgehend vom ursprünglichen Wert sofort monoton fallend auf den neuen Wert vermindert, wobei das vom Generator aufgenommene Drehmoment $M_{Gi}$ so lange größer bleibt als das jeweilige Drehmoment $M_{Mi}$ des Verbrennungsmotors, bis der Verbrennungsmotor seine neue Soll-Leistung $P_{Ms}$ erreicht hat.

Die vorstehenden Ausführungen beziehen sich aus Gründen der einfacheren Darstellung jeweils auf die Veränderung von einem stationären Betriebszustand zu einem anderen stationären Betriebszustand des Verbrennungsmotors. In der tatsächlichen Fahrpraxis ändert sich die angeforderte Leistung jedoch laufend. Das bedeutet, daß ein neuer, der geänderten Fahrpedalstellung entsprechender Betriebspunkt noch nicht erreicht ist, wenn schon wieder eine neue Änderung der Fahrpedalstellung erfolgt. Die erfindungsgemäßen Wirkungsweisen finden jedoch auch in solchen Situationen in grundsätzlich gleicher Weise statt. Im regelungstechnischen Sinn findet lediglich eine Änderung der Führungsgröße statt. Der als Folgeregler ausgelegte Regler arbeitet weiter, auch wenn die Regelabweichung zwischenzeitlich nicht zu Null geworden ist. Die beschriebene Vorgehensweise bewirkt, daß der Verbrennungsmotor auf die geforderte Leistung eingestellt und gleichzeitig tendenziell immer auf die Kennlinie zurückgeführt wird.

Nachfolgend wird die Erfindung anhand der Figuren 1 bis 4 näher erläutert. Es zeigen:

Figur 1      eine schematische Darstellung wesentlicher Elemente eines erfindungsgemäßen Fahrzeugs,

Figur 2      ein Motorkennfeld für einen Verbrennungsmotor,

Figur 3      das Motorkennfeld gemäß Figur 2 mit schematischer Eintragung des Verstellbereichs von Drehzahl und Drehmoment bei einem Einstellvorgang auf eine höhere Motorleistung,

Figur 4      das Motorkennfeld gemäß Figur 2 mit schematischer Eintragung des Verstellbereichs von Drehzahl und Drehmoment bei einem Einstellvorgang auf eine niedrigere Motorleistung.

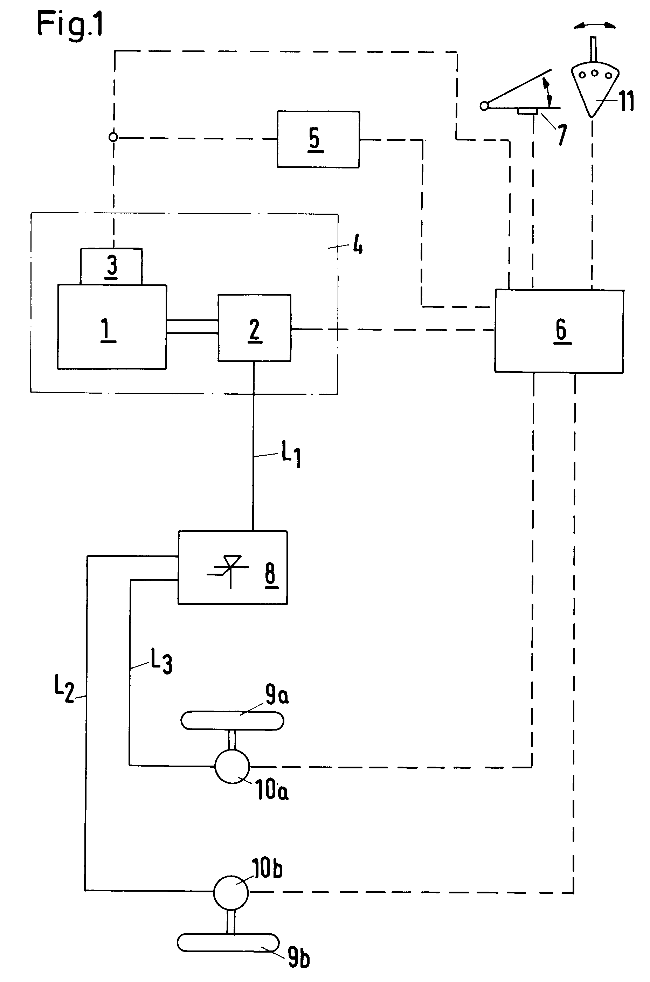

Figur 1 zeigt schematisch wesentliche Antriebselemente eines nicht-spurgebundenen Kraftfahrzeugs. Eine aus einem Verbrennungsmotor 1 und einem elektrischen Generator 2 bestehende Verbrennungsmotor-Generator-Einheit(VGE) 4 liefert über eine Leitung $L_1$, über eine als Leistungselektronik ausgebildete Stromversorgung 8 und über die Leitungen $L_2$ und $L_3$ elektrische Antriebsenergie an zwei Elektromotoren 10a und 10b. Die Elektromotoren 10a und 10b sind direkt an zwei Antriebsräder 9a und 9b gekoppelt. Dadurch werden die Räder 9a und 9b abhängig von dem von der Stromversorgung 8 an die Elektromotoren 10a und 10b gelieferten Strom angetrieben.

Die Leistungselektronik ist in Fig. 1 in schematischer Vereinfachung als einheitlicher Funktionsblock für den Generator 2 und die beiden Elektromotoren 10a und 10b dargestellt und sorgt für die Kommutierung dieser elektrischen Maschinen. In der praktischen Ausführung wäre jeder elektrischen Maschine zweckmäßigerweise eine eigene Leistungselektronik für diese Aufgaben zugeordnet.

Das in Fig. 1 angedeutete Fahrzeug könnte auch mit einem Allradantrieb ausgestattet sein, wobei dann weitere Leitungen zu den Elektromotoren führen würden, die mit den übrigen (nicht dargestellten) Antriebsrädern des Fahrzeugs gekoppelt wären. Selbstverständlich könnte auch anstelle einer direkten Zuordnung der Elektromotoren zu jeweils einem Rad auch die Zuordnung jeweils eines Elektromotors zu einer Antriebsachse vorgesehen sein.

Der den Elektromotoren 10a und 10b über die Stromversorgung 8 zugeführte Strom wird gesteuert von einer elektronischen Steuerung 6, die einen Mikroprozessor und eine Speichereinrichtung umfaßt. In der Speichereinrichtung sind Steuerprogramme, Kennlinien und dergleichen gespeichert. Zur Überwachung der antriebstechnischen Funktionen des Fahrzeugs ist die Steuerung 6 über gestrichelt dargestellte Signal-Leitungen mit dem Generator 2, der Stromversorgung 8, den Elektromotoren 10a und 10b, einem Sensor zur Erfassung der Stellung des Fahrpedals 7, einer vom Fahrer betätigbaren Eingabeeinrichtung 11 sowie einem Regler 5 verbunden. Der Regler 5 seinerseits steht in Wirkverbindung mit der Einstellung (z.B. Drosselklappenaktuator) einer Kraftstoffzuführung 3 des Verbrennungsmotors 1. Auf diese Weise wird die elektronische Steuerung 6 einerseits mit Informationen über den vom Fahrer gewünschten Fahrzustand versorgt. Die Stellung des Fahrpedals 7, dessen Funktion selbstverständlich auch anders (z.B. durch einen handbetätigten Hebel) erfüllt werden könnte, zeigt an, welche Antriebsleistung jeweils angefordert wird, d.h. letztlich, wenn ein stationärer Fahrzustand erreicht werden soll, welche Geschwindigkeit das Fahrzeug bei den gegebenen Fahrwiderständen erhalten soll. Über eine gespeicherte Motorkennlinie des Verbrennungsmotors 1, auf die nachfolgend noch näher eingegangen wird, ist der Steuerung 6 vorgegeben, unter welchen Verbrennungsmotor-spezifischen Bedingungen (Drehzahl, Drehmoment, Kraftstoffverbrauch, Schadstoffemission usw.) diese Leistung bereitgestellt werden soll. Zur Berücksichtigung unterschiedlicher Optimierungskriterien können mehrere Kennlinien für den Betrieb des Verbrennungsmotors gespeichert sein, die der Fahrer über die Eingabeeinrichtung 11 auswählen kann.

Durch die Signal-Leitungen zum Generator 2, zu den Elektromotoren 10a, 10b und zur Stromversorgung 8 ist die Steuerung 6 fortlaufend informiert über die aktuellen Werte der Drehzahlen, Drehmomente und/oder Leistungen (über die Ströme) am Generator 2 und an den Elektromotoren 10a, 10b.

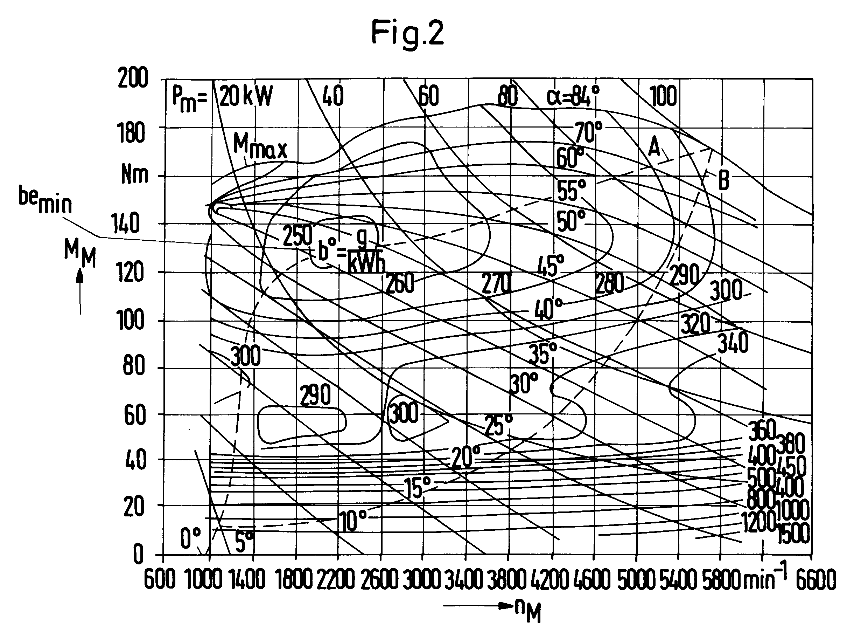

Figur 2 zeigt exemplarisch das Motorkennfeld eines Verbrennungsmotors mit 100 KW Leistung für ein Kraftfahrzeug. Aufgetragen ist das Motormoment $M_M$ über der Motordrehzahl $n_M$. Die eingetragenen Hyperbeln stellen Linien konstanter Leistung dar. Weiterhin ist für verschiedene Drosselklappenwinkel alpha die Abhängigkeit des Motordrehmoments $M_M$ von der Drehzahl $n_M$ eingezeichnet. Außerdem sind Linien gleichen spezifischen Kraftstoffverbrauchs

$$b \left( in \; \frac{g}{KWh} \right)$$

eingetragen.

Die Linie mit dem für die jeweilige Drehzahl $n_M$ maximalen Motordrehmoment $M_M$ ist mit $M_{max}$ bezeichnet. Man erkennt sofort, daß bei vorgegebener Motordrehzahl $n_M$ des Verbrennungsmotors je nach Drosselklappenwinkel alpha unterschiedlich hohe Drehmomente $M_M$ erzeugbar sind und daß eine bestimmte Leistung $P_M$ mit sehr unterschiedlichen Drehzahl/Drehmoment-Kombinationen und demzufolge sehr unterschiedlich hohen spezifischen Kraftstoffverbräuchen einstellbar ist. Die mit A bezeichnete gestrichelte Linie stellt exemplarisch eine mögliche Kennlinie im Sinne der Erfindung dar, bei der die Leistung $P_M$ des Verbrennungsmotors 1 mit vergleichsweise geringem spezifischem Kraftstoffverbrauch erzeugt wird. Diese Kennlinie gibt der elektronischen Steuerung 6 vor, welche Drehmoment/Drehzahl-Kombination unter welchem Drosselklappenwinkel alpha am Verbrennungsmotor 1 für eine gewünschte Antriebsleistung jeweils einzustellen ist. Im Gegensatz zu einem herkömmlich angetriebenen Fahrzeug kann die Einstellung des Betriebspunktes ganz gezielt erfolgen, da eine mechanische Entkopplung zu den Antriebsrädern (Fahrgeschwindigkeit) vorhanden ist. Bei einem Fahrzeug mit z.B. handbetätigtem Schaltgetriebe sind bei gegebener Geschwindigkeit wegen der starren Stufung des Übersetzungsverhältnisses nur eine kleine Anzahl (z.B. drei) verschiedener Betriebspunkte mit gleicher Leistung einstellbar.

Beim Fahren mit konstanter Geschwindigkeit sind dort Fahrzuggeschwindigkeit und Getriebeübersetzung maßgebend dafür, wie weit der tatsächlich erreichte Betriebspunkt des Verbrennungsmotors vom optimalen Betriebspunkt der Kennnlinie entfernt ist. Eine Fahrwiderstandskennlinie für den höchsten Gang eines Kraftfahrzeugs mit Schaltgetriebe ist exemplarisch als gestrichelte Linie B in das Kennfeld der Figur 2 eingetragen. Man erkennt, daß mit Ausnahme des Punktes mit der höchsten Leistung die möglichen Betriebspunkte (für einen stationären Fahrzustand) bei dem konventionell angetriebenen Fahrzeug stets einen höheren spezifischen Kraftstoffverbrauch mit sich bringen als die Betriebspunkte des erfindungsgemäß angetriebenen Fahrzeugs.

Bei dem erfindungsgemäßen Fahrzeug wird demgegenüber entsprechend der zu Grunde gelegten Kennlinie bei vorgegebener Drosselklappenstellung genau die gewünschte Kombination von Drehzahl $n_M$ und Drehmoment $M_M$ des Verbrennungsmotors eingestellt, die dem Schnittpunkt der Kennlinie A mit der Drosselklappenlinie entspricht. Es wird also unter den optimierten Betriebsbedingungen der Kennlinie eine bestimmte elektrische Generatorleistung $P_G$ erzeugt.

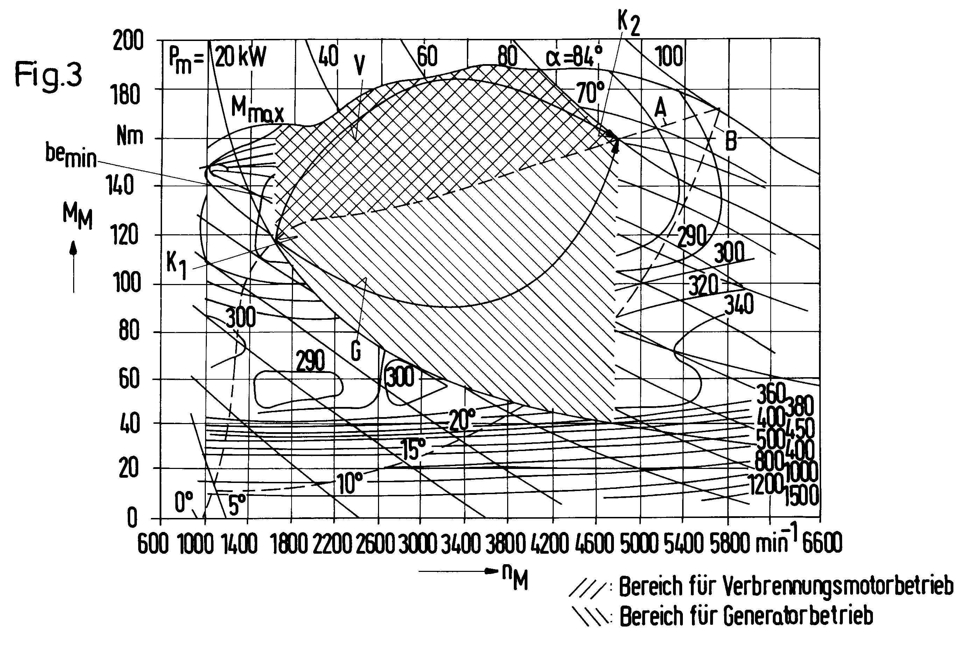

In Figur 3 ist anhand des Kennfeldes von Figur 2 dargestellt, wie sich Drehzahl und Drehmoment vom Verbrennungsmotor 1 und Generator 2 bei einem erfindungsgemäßen Fahrzeug ändern können, wenn eine sprunghafte Erhöhung der Leistungsanforderung des Verbrennungsmotors von $P_{Mi}$ = 20 KW auf $P_{Ms}$ = 80 KW erfolgt. In der Ausgangssituation bei Beginn des Verstellvorgangs (z.B. Beschleunigungsvorgang) ist der Betriebspunkt $K_1$ auf der Motorkennlinie A gegeben, d.h. bei einem Drosselklappenwinkel alpha von etwa 30° liegt bei einem Motordrehmoment des Verbrennungsmotors 1 von $M_{Mi}$ = 120 Nm eine Motordrehzahl von $n_{Mi}$ = 1600 min$^{-1}$ an. Der mit der Verstellung des Fahrpedals 7 durch den Fahrer ausgelöste Ablauf in der Antriebssteuerung des Fahrzeugs ist wie folgt:

Das an die elektronische Steuerung 6 gelangte Fahrpedalstellungssignal führt unter Berücksichtigung der Zustands- und Einstelldaten (z.B. Kennlinienauswahl) des Fahrzeugantriebs zunächst zur Berechnung des gewünschten neuen Sollwertes der Antriebsleistung $P_{As}$. Anhand der zugrundegelegten Motorkennlinie A kann die elektronische Steuerung 6 die dem gewünschten neuen Betriebspunkt $K_2$ in Figur 3 zugeordnete Soll-Drehzahl $n_{Ms}$ des Verbrennungsmotors 1 und den Einstellwert $y_{st}$ der Kraftstoffzuführung 3 für den neu einzustellenden Betriebszustand ermitteln. Der an die Betätigungseinrichtung der Kraftstoffzuführung 3 (z.B. Drosselklappenaktuator) gegebene Einstellwert y ist erfindungsgemäß um einen variablen Reglereinstellanteil $Y_R$ des Reglers 5 (z.B. PID-Regler) erhöht, wobei im Falle einer Drosselklappe der Drosselklappenwinkel selbstverständlich auf y = $y_{St}$ + $y_R$ = 90° begrenzt ist.

Der Reglereinstellanteil $y_R$ richtet sich in seiner Höhe nach der festgestellten Regelabweichung, die beispielsweise als Differenz zwischen der jeweils erreichten Drehzahl $n_{Mi}$ des Verbrennungsmotors 1 und der Solldrehzahl $n_{Ms}$ gemäß neuem Betriebspunkt $K_2$ der Motorkennlinie A zu ermitteln ist. Sobald die Regelabweichung null ist, also der Verbrennungsmotor 1 seinen neuen Betriebspunkt $K_2$ erreicht hat, wird y = $y_{st}$. Infolge der Erhöhung des Einstellwertes y der Kraftstoffzuführung 3 stellt sich am Verbrennungsmotor 1 ein erhöhtes Drehmoment ein, das seinerseits zu einer Erhöhung der Drehzahl $n_{Mi}$ des Verbrennungsmotors 1 führt. Während der Drehzahlverstellung liegt das Drehmoment $M_{Mi}$ des verbrennungsmotors 1 in dem durch die entsprechende Schraffur angedeuteten Bereich, also mindestens auf der Höhe der Motorkennlinie A. Beispielsweise wird im Interesse einer schnellen Drehzahlverstellung das Drehmoment $M_{Mi}$ etwa entlang der eingezeichneten Kurve V verändert.

Solange die Drehzahl $n_{Mi}$ noch nicht ihren Sollwert $n_{Ms}$ des neuen Betriebspunktes $K_2$ erreicht hat, sorgt die elektronische Steuerung 6 dafür, daß die vom Generator 2 erzeugte Leistung $P_{Gi}$ über der Leistung am Punkt $K_1$ ist und monoton steigt, aber das vom Generator 2 aufgenommene Drehmoment $M_{Gi}$ auf jeden Fall unter dem jeweiligen Drehmoment $M_{Mi}$ des Verbrennungsmotors 1 bleibt. Der Bereich, in dem das aufgenommene Drehmoment $M_{Gi}$ des Generators 2 liegen kann, ist ebenfalls durch eine (unterschiedlich zum Verbrennungsmotordrehmoment $M_{Mi}$) schraffierte Fläche dargestellt. Vorzugsweise bleibt das Generatordrehmoment $M_{Gi}$ etwa auf der Motorkennlinie A. Ein anderer möglicher Verlauf des Generatordrehmoments $M_{Gi}$ ist mit dem Kurvenzug G angedeutet, gemäß der das Generatordrehmoment $M_{Gi}$ zunächst abnimmt, wobei allerdings die Generatorleistung zumindest geringfügig wegen der Drehzahlerhöhung monoton ansteigt. In der Schlußphase der Drehzahlverstellung steigt $M_{Gi}$ wieder an. Mit Erreichen der Solldrehzahl $n_{Ms}$ werden das vom Verbrennungsmotor 1 erzeugte Drehmoment $M_{Ms}$ und das vom Generator 2 aufgenommene Soll-Drehmoment $M_{Gs}$ gleich groß, so daß der Generator 2 dann seine neue Soll-Leistung $P_{Gs}$ abgibt, die unter Berücksichtigung des Generatorwirkungsgrades der Soll-Motorleistung $P_{Ms}$ entspricht.

Bei einer alternativen Regelstrategie für den Regler 5 wird als Regeldifferenz die Differenz zwischen der jeweiligen Generatorleistung $P_{Gi}$ und der dem neuen Betriebspunkt entsprechenden Generatorleistung $P_{Gs}$ (= gewünschter neuer Antriebsleistung $P_{As}$) zugrundegelegt. Im übrigen entspricht die Wirkungsweise hierbei vollständig der vorstehend beschriebenen.

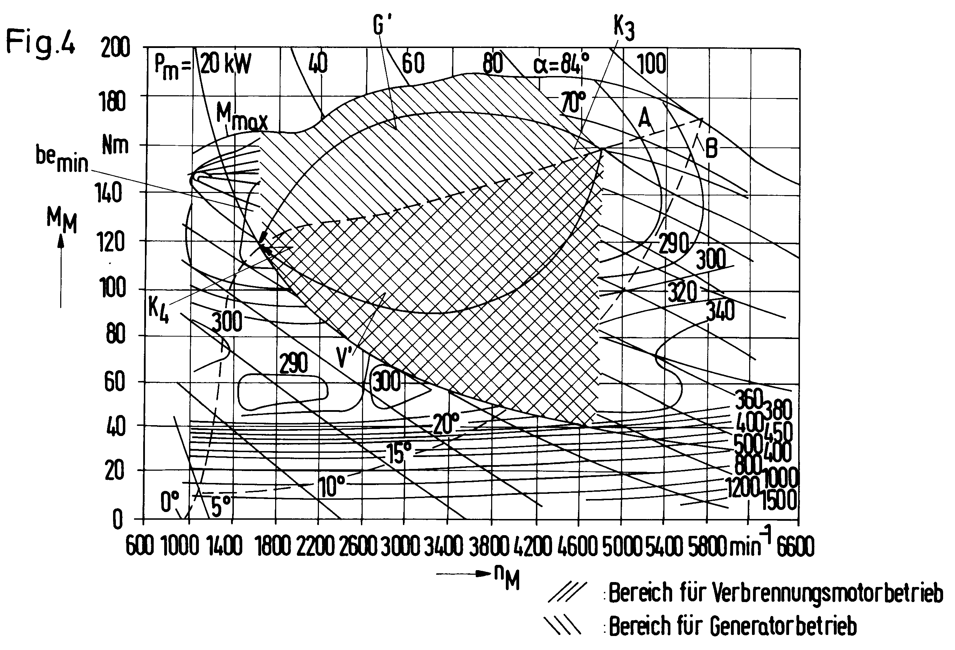

Der gegenüber einem Beschleunigungsvorgang umgekehrte Fall, also ein Verzögerungsvorgang, ist in Figur 4 schematisch aufgezeigt. Ähnlich wie bei Figur 3 ist auch hier wieder der insgesamt erfindungsgemäß vorgesehene Verstellbereich für die Drehmomente und Drehzahlen von Verbrennungsmotor 1 und Generator 2 durch eine Fläche dargestellt, die nach oben durch die Linie $M_{max}$ des jeweils maximalen Drehmomentes des Verbrennungsmotors 1 und die Hyperbel konstanter Leistung im ursprünglichen Betriebspunkt ($K_3$) und nach unten durch die Hyperbel konstanter Leistung im neuen Betriebspunkt ($K_4$) sowie nach rechts und links durch die Drehzahlgrenzen der Betriebspunkte $K_3$ und $K_4$ eingegrenzt ist. Da der Verbrennungsmotor 1 auf eine niedrigere Drehzahl gebracht werden muß, sorgt die elektronische Steuerung 6 dafür, daß das vom Generator 2 aufgenommene Drehmoment $M_{Gi}$ während der Drehzahlverstellung stets größer ist als das vom Verbrennungsmotor 1 erzeugte Drehmoment $M_{Mi}$, so daß der Verbrennungsmotor 1 abgebremst wird. Die Leistung $P_{Gi}$ des Generators 2 ist dabei monoton fallend, bis der neue Betriebspunkt $K_4$ erreicht ist. Vorzugsweise liegt das Generatordrehmoment $M_{Gi}$ etwa auf der Motorkennlinie A.

Es ist selbstverständlich auch möglich, das Generatordrehmoment $M_{Gi}$ bei abnehmender Drehzahl $n_{Gi}$ anfänglich auf einen erhöhten Wert zu bringen und zum Ende der Drehzahlabsenkung hin wieder stärker zu vermindern, wie dies durch den Kurvenzug G' angedeutet ist. Ein möglicher Drehmomentverlauf für den Verbrennungsmotor 1 ist durch den Kurvenzug V' dargestellt. Auf jeden Fall bleibt das Verbrennungsmotordrehmoment $M_{Mi}$ auf oder unterhalb der Motorkennlinie A.

Bei einem erfindungsgemäßen Fahrzeug kann die Einstellung des Verbrennungsmotors auf vorgegebene Betriebspunkte unabhängig von der jeweiligen Fahrgeschwindigkeit erfolgen, da seine Drehzahl wegen der mechanischen Entkopplung völlig losgelöst von der Drehzahl der Antriebsräder variiert werden kann. Bei jeder Fahrgeschwindigkeit kann jede beliebige Antriebsleistung (innerhalb der gegebenen Leistungsgrenzen) aktiviert werden, ohne daß es hierzu eines Wechsels des Fahrgangs bedarf. Für den Fahrer ergibt sich hierdurch eine wesentliche Entlastung. Die verbesserten Leistungsmerkmale werden durch die Erfindung ohne Einbuße an Fahrkomfort sichergestellt, da der Übergang von einem Betriebspunkt zu einem anderen praktisch völlig ruckfrei erfolgt, auch wenn er sehr "kraftvoll" durchgeführt wird. Im Gegensatz zu herkömmlichen Fahrzeugantrieben ist es möglich, den Verbrennungsmotor dabei im Hinblick auf vorgegebene Kriterien wie etwa Minimierung des Kraftstoffverbrauchs praktisch ständig optimal zu betreiben.

**Patentansprüche**

1. Nicht-spurgebundenes Fahrzeug mit einem Verbrennungsmotor (1), an dessen Kurbelwelle ein elektrischer Generator (2) gekoppelt ist, mit mindestens einem an ein Antriebsrad (9a, b) oder eine Antriebsachse des Fahrzeugs gekoppelten Elektromotor (10a, b), mit einer den Generator (2) mit dem oder den Elektromotoren (10a, b) verbindenden Leistungselektronik-Einheit (Stromversorgung 8), mit einer elektronischen Steuerung (6) und mit einem vom Fahrer zu betätigenden Fahrpedal (7), das zur Einstellung einer gewünschten Antriebsleistung auf die Einstellung einer Kraftstoffzuführung (3) des Verbrennungsmotors (1) wirkt, gekennzeichnet durch folgende Merkmale:

   a) In der Steuerung (6) ist in Form von Algorithmen oder Wertetabellen für jeden vom Verbrennungsmotor (1) abzugebenden Leistungswert jeweils eine eindeutige Parameterkombination (Betriebspunkte einer zugrundegelegten Motorkennlinie) von Drehmoment, Drehzahl und Einstellung der Kraftstollzuführung (3) vorgegeben.

   b) Für die Betätigung der Einstellung y der Kraftstoffzuführung (3) ist ein Regler (5) vorgesehen.

   c) Die Einstellung y der Kraftstoffzuführung (3) ist additiv bestimmt aus einem von der Steuerung (6) anhand der jeweiligen Stellung des Fahrpedals (7) ermittelten Einstellwert $y_{st}$ für die Soll-Leistung $P_{Ms}$ des Verbrennungsmotors (1) (neuer Betriebspunkt), die der vom Fahrer gewünschten Soll-Antriebsleistung der Elektromotoren (10a, b) entspricht, und einem zeitlich (bis zum Erreichen des neuen Betriebspunktes) veränderlichen Stellanteil $y_R$ des Reglers (5).

   d) Die absolute Größe des Stellanteils $y_R$ des Reglers (5) ist in Abhängigkeit von der Regeldifferenz bestimmt, wobei die Regeldifferenz entweder in der Differenz zwischen der momentan erreichten Drehzahl $n_{Mi}$ des Verbrennungsmotors (1) und der Solldrehzahl $n_{Ms}$ des Verbrennungsmotors (1) im neuen Betriebspunkt besteht oder gebildet wird als Differenz zwischen der vom Generator (2) jeweils momentan abgegebenen Leistung $P_{Gi}$ und der dem neuen Betriebspunkt entsprechenden Soll-Leistung $P_{Gs}$ des Generators (2).

   e) Für den Fall, daß die Soll-Leistung $P_{Gs}$ höher als die momentane Leistung $P_{Gi}$ ist, läßt die Steuerung (6) die Leistung $P_{Gi}$ des Generators (2) ausgehend von ihrem momentanen Wert bis auf den Sollwert $P_{Gs}$ monoton steigen, wobei das vom Generator (2) aufgenommene Drehmoment $M_{Gi}$ so lange kleiner als das jeweilige Drehmoment $M_{Mi}$ des Verbrennungsmotors (1) bleibt, bis der Verbrennungsmotor (1) seine Soll-Leistung $P_{Ms}$ erreicht hat.

f) Für den Fall, daß die Soll-Leistung $P_{Gs}'$ kleiner als die momentane Leistung $P_{Gi}$ ist, vermindert die Steuerung (6) die Leistung $P_{Gi}$ des Generators (2) bis auf den neuen Sollwert $P_{Gs}$ monoton, wobei das vom Generator (2) aufgenommene Drehmoment $M_{Gi}$ so lange, bis der Verbrennungsmotor (1) seine neue Soll-Leistung $P_{Ms}'$ erreicht hat, größer als das jeweilige Drehmoment $M_{Mi}$ des Verbrennungsmotors (1) bleibt.

2. Fahrzeug nach Anspruch 1,
dadurch gekennzeichnet,
daß das Drehmoment $M_{Mi}$ des Verbrennungsmotors (1) bis zum Erreichen der Soll-Leistung $P_{Ms}$ jeweils oberhalb des Drehmomentes gehalten wird, das sich für die jeweilige Motordrehzahl $n_{Mi}$ aus der zugrundegelegten Kennlinie des Verbrennungsmotors (1) ergibt.

3. Fahrzeug nach Anspruch 2,
dadurch gekennzeichnet,
daß das Drehmoment $M_{Mi}$ des Verbrennungsmotors (1) bis zum Erreichen der Soll-Leistung $P_{Ms}$ zumindest zeitweilig oberhalb des dem neuen Betriebspunkt zugeordneten Wertes $M_{Ms}$ gehalten wird.

4. Fahrzeug nach einem der Ansprüche 1 bis 3,
dadurch gekennzeichnet,
daß das vom Generator (2) aufgenommene Drehmoment $M_{Gi}$ bis zum Erreichen der Soll-Leistung $P_{Ms}$ des Verbrennungsmotors (1) jeweils unterhalb des Drehmoments gehalten wird, das sich bei der jeweiligen Motordrehzahl $n_{Mi}$ aus der zugrundegelegten Motorkennlinie ergibt.

5. Fahrzeug nach einem der Ansprüche 1 bis 4,
dadurch gekennzeichnet,
daß der Regler (5) ein PID-Regler ist.

6. Fahrzeug nach einem der Ansprüche 1 bis 5,
dadurch gekennzeichnet,
daß mehrere unterschiedliche Verbrennungsmotorkennlinien, die im Hinblick auf ein oder mehrere vorgegebene Zielkriterien, insbesondere auf
- minimalen Kraftstoffverbrauch,
- Reaktionsverhalten der Einheit (4) aus Verbrennungsmotor (1) und Generator (2),
- minimale Schadstoffemission,
- minimale Geräuschemission,
- minimalen Aggregateverschleiß
optimiert sind, in der Steuerung (6) gespeichert und vom Fahrer wahlweise abrufbar sind.

7. Fahrzeug nach einem der Ansprüche 1 - 6,
dadurch gekennzeichnet,
daß das Drehmoment $M_{Mi}$ des Verbrennungsmotors (1) bis zum Erreichen der Soll-Leistung $P_{Ms}'$ jeweils unterhalb des Drehmomentes gehalten wird, das sich für die momentane Motordrehzahl $n_{Mi}$ aus der zugrundegelegten Motorkennlinie ergibt.

8. Fahrzeug nach Anspruch 7,
dadurch gekennzeichnet,
daß das Drehmoment $M_{Mi}$ des Verbrennungsmotors (1) bis zum Erreichen der Soll-Leistung $P_{Ms}'$ zumindest zeitweilig unterhalb des dem neuen Betriebspunkt zugeordneten Wertes $M_{Ms}'$ gehalten wird.

9. Fahrzeug nach einem der Ansprüche 6 bis 8,
dadurch gekennzeichnet,
daß das vom Generator (2) aufgenommene Drehmoment $M_{Gi}$ bis zum Erreichen der neuen Soll-Leistung $P_{Ms}'$ des Verbrennungsmotors (1) jeweils oberhalb des Drehmoments gehalten wird, das sich bei der momentanen Motordrehzahl $n_{Mi}$ aus der zugrundegelegten Motorkennlinie ergibt.

10. Fahrzeug nach einem der Ansprüche 1 bis 9,
dadurch gekennzeichnet,
daß das vom Generator (2) aufgenommene Drehmoment $M_{Gi}$ bis zum Erreichen der Soll-Leistung $P_{Ms}'$ des Verbrennungsmotors (1) dem Drehmoment entspricht, das sich für die jeweilige Drehzahl aus der zugrundegelegten Kennlinie des Verbrennungsmotors (1) ergibt.

# Fig.1

Fig.2

EP 0 556 942 A1

Fig.3

**Bereich für Verbrennungsmotorbetrieb** ///
**Bereich für Generatorbetrieb** \\\

EP 0 556 942 A1

Fig.4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | PATENT ABSTRACTS OF JAPAN vol. 007, no. 163 (M-229)16. Juli 1983 & JP-A-58 069 403 ( DAIHATSU KOGYO KK ) 25. April 1983 * Zusammenfassung * | 1 | B60L11/02 |
| A,D | EP-A-0 249 806 (MAGNET-MOTOR GESELLSCHAFT FUER MANETMOTORISCHE TECHNIK MBH) * Anspruch 1 * | 1 | |
| A | US-A-4 498 016 (EARLESON) * Spalte 3, Zeile 50 - Spalte 5, Zeile 61 * | 1,5 | |
| A | US-A-4 853 553 (HOSIE) * Anspruch 1 * | 1 | |
| A | GEC ALSTHOM TECHNICAL REVIEW Nr. 5, 1986, PARIS FR Seiten 59 - 70 L. JOURDAN 'SERAC SOLID-STATE CONTROL SYSTEM FOR DIESEL-ELECTRIC LOCOMOTIVES' * Seite 65 * | 1 | |
| | | | **RECHERCHIERTE SACHGEBIETE (Int. Cl.5)** |
| | | | B60L B60K |

Der vorliegende Recherchenbericht wurde für alle Patentansprüche erstellt

| Recherchenort | Abschlußdatum der Recherche | Prüfer |
|---|---|---|
| DEN HAAG | 27 MAI 1993 | TOUSSAINT F.M.A. |

KATEGORIE DER GENANNTEN DOKUMENTE

X : von besonderer Bedeutung allein betrachtet
Y : von besonderer Bedeutung in Verbindung mit einer
     anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
     nach dem Anmeldedatum veröffentlicht worden ist
D : in der Anmeldung angeführtes Dokument
L : aus andern Gründen angeführtes Dokument
........................................................................
& : Mitglied der gleichen Patentfamilie, übereinstimmendes
     Dokument

EPO FORM 1503 03.82 (P0403)